## Europäisches Patentamt
## European Patent Office
## Office européen des brevets

(19)

(11) Publication number: **0 124 617**

**A1**

(12)

# EUROPEAN PATENT APPLICATION

published in accordance with Art. 158(3) EPC

(21) Application number: **83903412.1**

(22) Date of filing: **01.11.83**

Data of the international application taken as a basis:

(86) International application number:
**PCT/JP83/00391**

(87) International publication number:
**WO84/01748 (10.05.84 84/12)**

(51) Int. Cl.³: **B 60 C 15/06**

(30) Priority: **04.11.82 JP 194016/82**

(43) Date of publication of application:
**14.11.84 Bulletin 84/46**

(84) Designated Contracting States:
**DE FR GB**

(71) Applicant: **SUMITOMO RUBBER INDUSTRIES LIMITED**
No. 1-1, Tsutsui-cho 1-chome
Chuo-ku Kobe-shi Hyogo-ken(JP)

(72) Inventor: **YAMADA, Katsuhiko**
28-27, Kamokogahara 3-chome Nadaku
Kobe-shi Hyogo 657-01(JP)

(72) Inventor: **KADOMARU, Kazuo**
5, A-908, Nakahozumi 1-chome Ibaragi-shi
Osaka 567(JP)

(72) Inventor: **HAYASHI, Shigetaka**
12-71 Honmachi 6-chome Toyonaka-shi
Osaka 560(JP)

(74) Representative: **Arthur, Bryan Edward et al,**
Withers & Rogers 4 Dyer's Buildings Holborn
London EC1N 2JT(GB)

(54) **RADIAL TIRE.**

(57) An improvement to the bead structure of a radial tire consists of: a reinforcing layer of high-elasticity cords provided outside an upward-curled edge portion of a carcass; an inner protective layer positioned between the reinforcing layer and the upward-curled edge portion; and an outer protective layer positioned so as to be adjacent to the outer surface of the reinforcing layer. These protective layers have a height extending beyond the upper end of the reinforcing layer. The inner protective layer has cords in substantially the same direction as the cords of the reinforcing layer, while cords of the outer protective layer are arranged in a direction that crosses the cords of the reinforcing layer.

FIGURE 5

**0124617**

SPECIFICATION

Title of the Invention

Radial Tire

Technical Field

The present invention relates to a radial tire equipped on such heavy duties vehicles as trucks, buses, etc.

Background Art

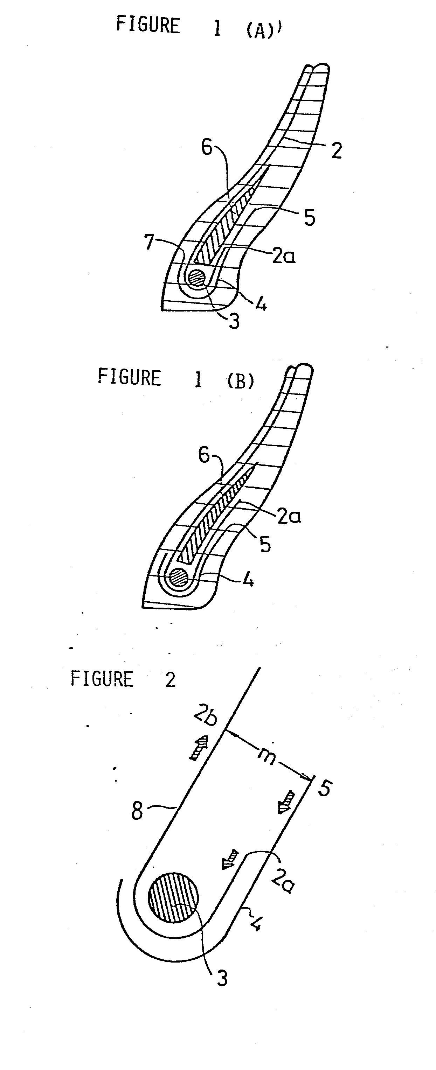

Heretofore, the bead structure of radial tires for heavy duties vehicles in such that, as shown in Fig. 1(a), for reinforcing the part about the termination (2a) of a carcass ply (2) of metal cords which is wound up around a bead core (3) from inside toward outside, a metal cord reinforcing layer (4) is arranged in such a way as to extend inward from outside the tire bead part, then passing its bottom part, thereby surrounding it. Said metal cord reinforcing layer (4) is provided for an exclusive purpose of alleviating the stress focusing on the wound-up termination (2a) of the carcass ply (2) and, accordingly, a structure having the outside upper end part (5) of the metal cord reinforcing layer (4) placed higher than the aforementioned wound-up termination (2a) has been employed. On the other hand, in order to more effectively prevent withdrawal of the carcass ply, a structure in which the top part (5) is placed low, while raising the wound-up termination (2a) to a higher level, has also been employed, but in this arrangement, the stress alleviating effect by the metal cord reinforcing layer is small.

The inside end part (7) of the metal cord reinforcing layer is placed in the neighborhood of the bead bottom part, because the inside end part (7) of the metal cord reinforcing layer (4) is thought to have no effect on reinforcement of the aforementioned termination (2a) of the carcass ply and, moreover, if the inside end part (7) is extended upward of the bead part where large deformation occurs, this inside end part (7) will provide a new focusing of stress and, for this reason, its placing about the bead bottompart is more preferable.

In the former structure hereabove-mentioned, however, the upper end part (5) of the metal cord reinforcing layer outside the bead part provides a new focusing of stress, while in the latter, focusing of stress still occurs at the wound-up termination (2a). In order to effectively forestall this problem, a structure having a reinforcing fiber layer arranged still outside the aforementioned metal cord reinforcing layer (4) was proposed. (Patent Publication No. 44122 of 1974) In such a structure, however, the bead part becomes thick, tending to induce heating, and under a high load, the strain imposed on the bead part itself increases. As a result, the cord ends of the reinforcing fiber layer themselves are likely to form the nucleus for causing separation due to focusing of stress in conjunction with the top parts of the carcass and the metal cord reinforcing layer.

Against this background, the object of this invention is, in overcoming the defects of prior arts hereabove described, to give the bead part effective and adequate reinforcing effect to inhibit strain by arranging in a specific structure the reinforcing elements which otherwise provide focusing of stress, as they are used for the reinforcing purpose, as well as making effective dispersion and alleviation of stress, so that the bead part which is required under rigorous using conditions may be improved and a heavy duty tire which permits several times regeneration of tread usually performed on tires of this type may by provided.

Then as a result of repeated studies on the cause of separation of the bead part of a radial tire for heavy duties , it was found out that under a high load condition, the amount of the change in relative positions of the top part (5) of the reinforcing layer of the high elasticity cords, e.g., the metal cord reinforcing layer and the position (2b) on the carcass ply corresponding to said top part (5). that is, the intersection with the carcass ply (2) of the imaginary line (m) extending from the top end part (5) of the metal cord reinforcing layer (4) in the thickness direction of the bead part, namely, the amount of the layer strain, particularly, the shearing strain, increases. As a consequence, and due also to the stepped change in rigidity near the upper part of the metal cord reinforcing layer, separation between them and rubber therearound occurs and this further develops and grows into cracks which extend to the tire surface under the repetitive dynamic strains, while the rolling stocks are running.

Thus the causes for static and dynamic layer strain of the bead part of a tire may be explained as hereunder:
(a) Explaining, is reference to Fig. 2, the deformation behavior of carcass ply, when filling the inside pressure into a tire formed to a die design, where the static layer strain is concerned, first of all, with the bead core (3) as the center, the inside of the main carcass ply (8) is extended radially outwardly of the tire, while the wound-up end part (2a) of the carcass ply is stretched radially inwardly. Further, the metal cord reinforcing layer (4) arranged adjacent to this wound-up part (2a) undergoes a change, following the movement of the wound-up part. For this reason, a radial layer shearing strain is produced between the main carcass ply (8), and the wound-up end part (2a) or the metal cord reinforcing layer (4).

(b) Then where the dynamic layer strain is concerned, when a tire is rolling on ground, the tire warps most in the longitudinal direction, with the bead part undergoing deformation along side of rim flange due to its bending in the form of its side part bulging. At this time, on the wound-up end part, strain develops in the radial direction, circumferential direction and the shearing direction of the tire.

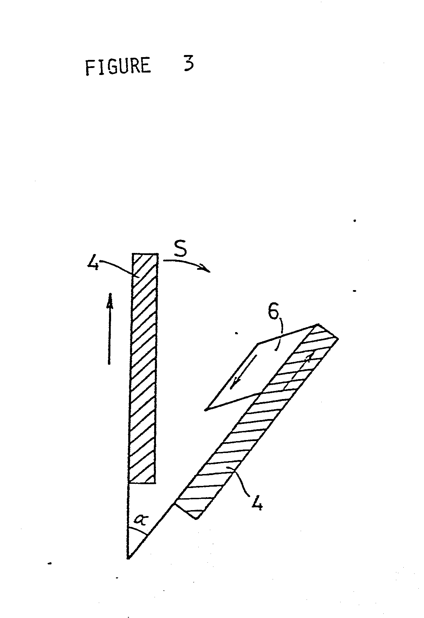

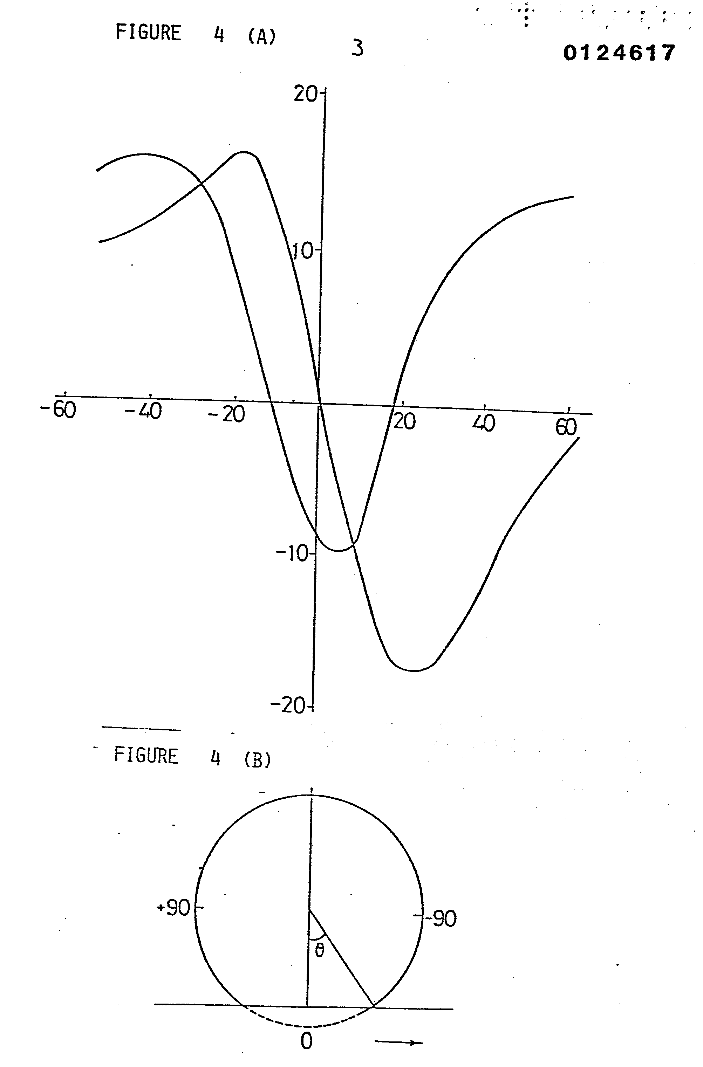

Thus, referring to Fig. 3, due to the bending of a tire, the cord reinforcing layer (4) is deformed by the strain angle ($\alpha$), as indicated by an arrow (S direction). As a result, the cord reinforcing layer (4) and the rubber stock (6) are respectively stretched in the arrows directions, causing spalling at the border between them. Further, examining this in the relationship between the rotational angle and the amount of strain, when the tire is running, as shown in Fig. 4(a), the distribution of the radial direction strain of a tire shows a wide fluctuation in the amount of strain, with the tire's ground contacting center (0° turning angle) as the border. In Fig. 4(a), the abscissa gives the turning angle of a tire indicated by Fig. 4(b) and the ordinate the amount of strain (%), plus indicating stretching strain and minus compression strain, α representing the amount of compression and β total amount of strain. The measuring condition is under 8.0 kg/cm$^2$ internal pressure and 7.0 ton load.

The strain distribution in the shearing direction of a tire shows similar tendency. The aforementioned strain distribution accompanying the ground contacting rolling of a tire is periodically repeated, giving rise to heating loss of the bead part.

The so-called air-filled tire has air filled inside the tire sheel such that when it is equipped on a rolling stock, the load is mainly borne by the internal pressure. Accordingly, if the internal pressure of a tire is constant, the amount of deformation of the tire, especially that of its bead part, may be said nearly constant. Then to provide reinforcement for restraining deformation of the bead part, a very large number of plies need to be arranged, with the result that the volume of the bead part is extremely increased; consequently, its heating increases, thus its bead part rather tending to suffer from damage. Then for improving the durability of the bead part of an air-filled tire, effective dispersion and alleviation of the aforementioned layer strain are necessary under the premise of a constant deflection behavior. To serve this end, numerous studies have been carried out on the arranging relationship and materials of the wound-up part of the carcass ply, cord reinforcing layer, protective layers and stock rubber and this effort has been led to this invention.

Disclosure of Invention

The present invention provides a radial tire characterized in that while the termination of at least 1 sheet of carcass ply formed of a layer of radially or semi-radially arranged metal cords lined with rubber is wound up around a bead core, a rubber stock is arranged, extending from its bottom end adjacent to the bead core outwardly in the radial direction of the tire and in the space between the main carcass ply and the wound-up end part, with a reinforcing layer formed of high elasticity cords arranged on the outside of the aforementioned wound-up part and, further, with an inside protective layer disposed between said reinforcing layer and the wound-up end part and an outside protective layer disposed adjacent to the outside of the wound-up end part provided, these protective layers both having heights exceeding that of the aforementioned reinforcing layer and the cords of the aforementioned inside protective layer being oriented substantially in the same direction as the cords of the reinforcing layer, but the cords of the aforementioned outside protective layer being oriented in the direction intersecting the cords of the reinforcing layer.

Brief Description of the Drawings

Fig. 1, (a) and (b), are schematic views of bead parts of conventional tires;

Fig. 2 is a schematic view showing deformation behavior of the bead part;

Fig. 3 is a diagram for explanation of the condition of strain of the bead part accompanying the tire deformation;

Fig. 4(a) is a graph showing the relationship between the turning angle of a tire and the amount of strain;

Fig. 4(b) is a graph defining the turning condition of a tire;

Figs. 5 and 7 are sectional views of bead parts of tires of this invention; and

Fig. 6 is an explanatory diagram showing the state of the bead part strain accompanying the deformation of a tire.

Best Mode for Carrying Out the Invention

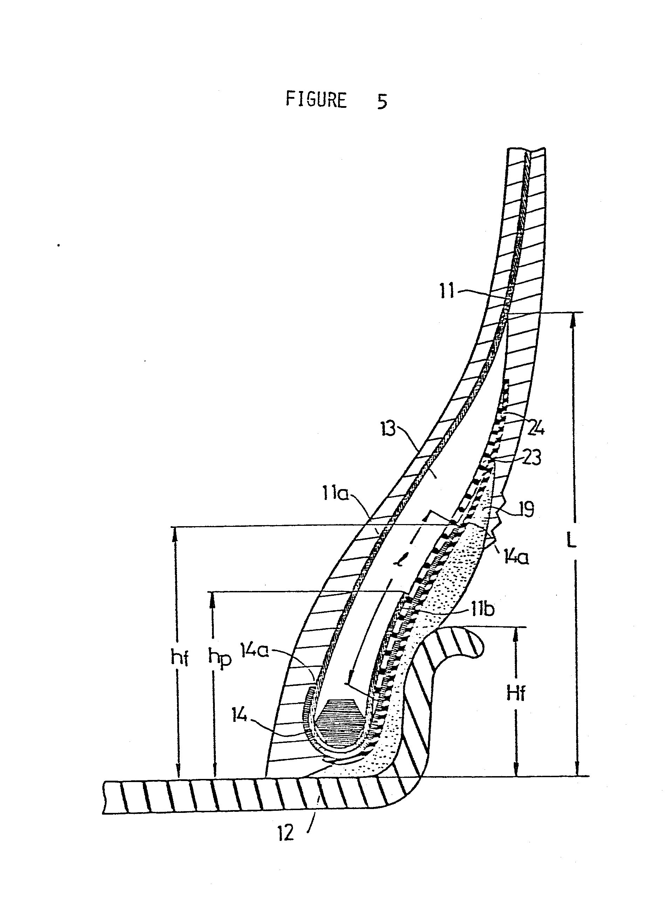

Fig. 5 shows a sectional structure of the bead part of the radial tire of this invention. Referring to this view, the carcass ply (11) formed of a layer of metal cords lined with rubber has its termination wound up around the bead core (12) and a rubber stock (13) is arranged between the main carcass ply (11a) and the wound-up end

part (11b). On the outside of the aforementioned wound-

up end part (11b), there is disposed a reinforcing layer (14) formed of high elasticity cords extending from outside the bead part through beneath its bottom to inside, surrounding said wound-up part.

Here, the height (hf) of the outside top (14b) of the reinforcing layer (14) is set higher than the height

(hp) of the top of the wound-up end part (11b), while the

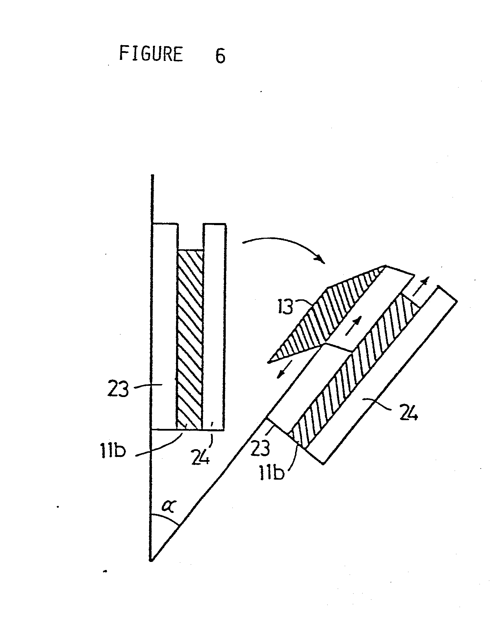

inside end (14a) of the reinforcing layer terminates at the bottom part of the bead, thereby enhancing its rigidity in the neighboarhoold of a part where the bead part abuts on the rim flange for betterment in the rim rubbing performance. However, in this instance, because the reinforcing layer (14) is composed of cords with high elasticity, its outside top provides focusing of stress due to the new rigid stepped part. According to this invention, while between the upper end     of the aforementioned wound-up end part (11b) and the reinforcing

layer (14), there is interposed an inside protective layer (23) having cords oriented substantially in the same direction as the cords of the reinforcing layer, adjacent to the outside of the reinforcing layer (14), there is disposed an outside protective layer (24) having cords oriented to intersect the cords of the reinforcing layer, thereby making effective dispersion and
alleviation of stress.  Explaining this in reference
to Fig. 6, the layer shearing strain develops mainly
between the top of the wound-up end part (11b), the reinforc-
ing layer (14) and the rubber stock (13) placed adjacent
thereto.  To counter this, an inside protective layer
(23) having cords oriented in the same direction as those
of the reinforcing layer is interposed between them,
thereby effectively dispersing toward the rubber stock
and alleviating the focusing of stress which occurs at
the top of the reinforcing layer.  Further, an outside
protective layer of cords oriented in the direction intersecting the cords of the reinforcing layer, which is
arranged on the outside of the reinforcing layer, curbs
the strain outside the reinforcing layer, thereby making
more effective the function of dispersing and alleviating
the focusing of stress of the aforementioned inside protective layer.  The reason to have the inside protective
layer (23) interposed between the top       of the wound-
up end part (11b)  and the reinforcing layer (14) is that sinc
focusing of stress often occurs at the top       of the
wound-up end part (11b), tending to cause spalling between it
the reinforcing layer at this part, it is intended to
alleviate this by means of the protective layer (23) and, further, to enhance the effect of dispersing and allaying the focusing of stress by close adhesive affixing of the bottom part of the protective layer to the rein-forcing layer. The length ($\ell$) of the superposed part between the protective layers (23) and (24) and the reinforcing layer (14) needs to be at least 10mm and the protective layers (23) and (24) are so arranged that they extend beyond the top of the reinforcing layer (14) by at least 20mm.

The protective layer shall be an organic fiber cords which need to have lower coefficient of initial elasticity than the cords used in the aforementioned reinforcing layer. For example, extiles of nylon, polyester, rayon, etc., are employed and the embedded rubber shall have dynamic elasticities (E*) ranging from 50 $\sim$ 120 kg hr/cm$^2$.

The cords of the protective layer, in the case of the inside one, are oriented substantially in the same direction as the cords of the reinforcing layer, substantially same herein meaning that these cords are so oriented as to be intersecting each other within $\pm 5°$ or not to be intersecting and in the case of the outside protective layer, they are oriented to make intersection with the cords of the reinforcing layer at an angle of at least 10° or preferably larger than 25°.

When the thickness of the protective layer is 1.0 ∿ 5.0 times the cord diameter of the wound-up end part adjacent to its outside or that of the reinforcing layer, or in the range of 1.2mm ∿ 6.0mm, for example, dispersion and alleviation of stress may be effectively attained.

According to this invention, the rim flange height (Hf) normally used for tires for heavy rolling stocks falls in the range of 36 ∿ 46mm and the top of the aforementioned wound-up part should desirably be arranged not to exceed 10mm beyond this flange height (Hf). This is because with rolling of the tire, the outside of the bead part undergoes falling-in deformation corresponding to the surface contour of the rim flange; as a result, the upper side of the top of the rim flange of the bead part becomes a region where the strains in the radial direction, the circumferential direction and the shearing direction of the tire are largest and it is undesirable that a rigid stepped part or the top of the wound-up part is located in this region. On the other hand, if the top of the wound-up part is too much lowered, the tire will not adequately bear the stretching strain applied radially outwardly on the main carcass ply and the compression strain applied radially inwardly on the wound-up part, giving rise to the so-called deplying phenomenon, if abrupt load

0124617

and lateral stress are applied. Accordingly, the top of the wound-up part should desirably be not lower than the rim flange height (Hf) by more than 10mm.

Then the top height (hf) of the reinforcing layer (14) of high elasticity cords is normally set in the range of 48 ∿ 68mm and the difference between the height (hp) of the top of the wound-up part and the height (hf) of the top of the reinforcing layer should desirably be 8 ∿ 15mm. If the top height (hf) is det higher than 68mm, it will be located in the highly bending region, where rubber exfoliation would take place due to the rigid stepped configuration at the top. As the rubber of the reinforcing layer, it is desirable, from standpoint of reinforcing the bead part and inhibiting strain, to use a rubber with the modulus of dynamic elasticity 80 ∿ 200 kg·f/cm$^2$, preferably 100 ∿ 160 kg·f/cm$^2$, and to choose the thickness of the layer in the range of 1.0 ∿ 2.5mm. The cords of the reinforcing layer should desirably be so oriented as to intersect the circumferential direction at an angle of 10° ∿ 40°, preferably 20° ∿ 35°, with the number of cords embedded 20 ∿ 45 ends/5cm.

The cords composing the reinforcing layer should be high elasticity cords, for example, cords with initial modulus higher than 10 kg·f/cm$^2$, including steel cords or aromatic polyamide fiber cords.

In the tire of this invention, interposed between the main carcass ply (11a) and the wound-up end part (11b) is a high elasticity rubber stock (13) extending from its bottom adjacent to the bead core, radially outwardly and with its thickness gradually diminishing, which is so arranged that its top extends beyond the tops of the aforementioned coating layers to the height (L) which falls in the range of 2.0 Hf ∿ 5.0 Hf. For the rubber stock, one with modulus of dynamic elasticity (E*) 80 ∿ 200 kg·f/cm² is employed.

According to this invention, a rubber chafer (19) is arranged on the outside of the bead part, extending from the bottom to the part which abuts on the rim flange and reaching to the region adjacent to the rubber stock. This rubber chafer is not only to prevent rim rubbing wear, but also further strengthen the bead part in concert with such reinforcing elements as the aforementioned metal cord reinforcing layer and rubber stock (13), etc. Relatively hard rubber, for example, one with the modulus of dynamic elasticity (E*) 100 ∿ 300 kg·f/cm² is used.

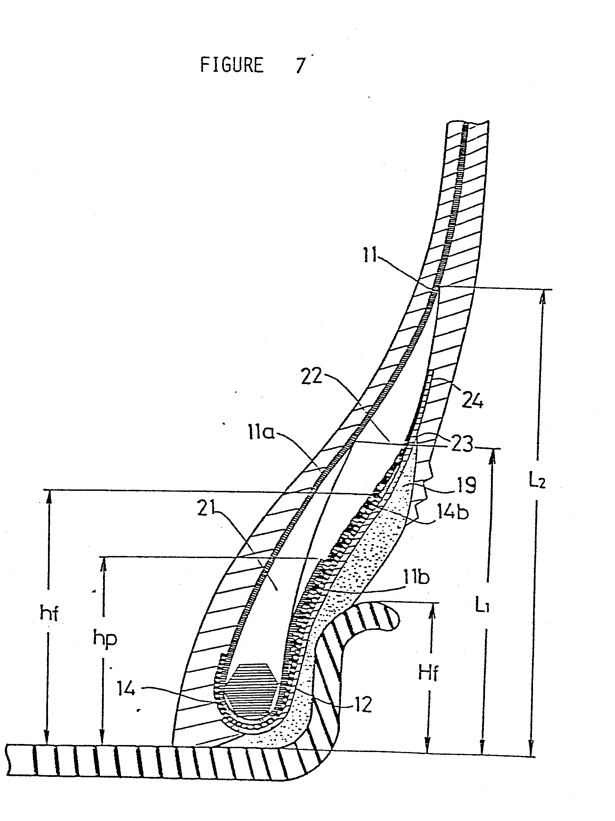

Then in Fig. 7, another embodiment is exhibited. In this embodiment, the rubber stock interposed between the main carcass ply (11a) and the wound-up end part (11b) and extending from the bottom part adjacent to the bead core, radially outwardly and with its thickness gradually diminishing, is composed of double layers of a high elasticity rubber (21) placed adjacent to the bead core (12) and having thicknesses gradually diminishing toward the side wall and a low elasticity rubber placed adjacent to the outside of the said high elasticity rubber (21) and with its top exceeding the top of the aforementioned high elasticity rubber (21). The high elasticity rubber (21) represses deformation of the bead part in cooperation with the aforementioned metal cord reinforcing layer (14). Its top extends beyond the top (14b) of the aforementioned reinforcing layer (14) to a height (L1) normally set in the range of 1.5 Hf $\sim$ 4.0 Hf. The modulus of dynamic elasticity (E*) of the high elasticity rubber (21) should preferably be in the range of 100 $\sim$ 500 kg·f/cm$^2$. For allaying compression strain in the neighborhood of the wound-up part (11b) of the carcass ply as well as effectively forestalling exfoliation of cord rubber in said neighborhood, the aforementioned low elasticity rubber (22) is so arranged as to abut or coat the outside tops of the aforementioned wound-up part (11b) and the reinforcing layer (14) and its top height (L2) is set within a range of 3 Hf $\sim$ 6 Hf. Further, the low elasticity rubber (22) used should preferably have a modulus of dynamic elasticity (E*) being 30 $\sim$ 90 kg·f/cm$^2$, preferably 40 $\sim$ 60 kg·f/cm$^2$.

Thus according to this invention, while a rubber stock with its thickness gradually reduced from the bead bottom part toward the side wall, particularly, a rubber stock of a double layer structure of a high elasticity rubber and a low elasticity rubber, is arranged between the main carcass ply (11a) formed of metal cords and the wound-up end part (11b) and the reinforcing layer (14), an inside protective layer having cords oriented in the same direction as those of the reinforcing layer is interposed between the wound-up end part or the reinforcing layer and the rubber stock, and an outside protective layer having cords oriented in the direction intersecting the cords of said reinforcing layer is arranged outside the reinforcing layer. Accordingly, due to some extensibility of the protective layers (20) and the gradual diminishing of the thickness of the rubber stock, while maintaining the rigidity of the bead part, the rigidity gradually declines from the bead toward the side wall and abrupt change in rigidity is allayed, whereby the focusing of stress at the outside tops of the reinforcing layer of high elasticity cords or the wound-up end part may be effectively prevented, thus enabling further improvement in durability.

In order to ascertain the effect of this invention, durabilities were measured on conventional structures of

tire sizes 10 00R  20 14PR, with steel cords used for carcass ply and braker and with the structure of the bead part varied widely.  The structures of the tires and the measured results of their performances are listed in Table 1.

Table 1

| | Example 1 | Example 2 | Example 3 | Comparison example 1 | Comparison example 2 | Comparison example 3 | Comparison example 4 | Comparison example 5 |
|---|---|---|---|---|---|---|---|---|
| Bead part structure | Fig. 7 | Fig. 5 | Fig. 5 | Fig. 1(a) | Fig. 1(b) | Note 4) | Fig. 5 | Note 5) |
| Carcass wound-up height (hp) mm | 45 | 45 | 45 | 45 | 62 | 45 | 45 | 45 |
| Reinforcing layer outside height (f) mm  Note 1) | 57 | 57 | 57 | 57 | 50 | 57 | 57 | 57 |
| Inside protective layer<br>(1) Material  Note 2)<br>(2) Denier<br>(3) Top height (mm) | Nylon 1260d/2<br>80 | Nylon 1260d/2<br>80 | Nylon 1260d/2<br>80 | - | - | - | Nylon 1260d/2<br>80 | |
| Outside protective layer<br>(1) Material<br>(2) Denier<br>(3) Top height (mm)<br>(4) Cord angle (to the circumferential direction) | Nylon 1260d/2<br><br>100<br>-27° | Nylon 1260d/2<br><br>100<br>-27° | Nylon 1260d/2<br><br>100<br>-50° | - | - | Nylon 1260d/2<br><br>100<br>-27° | Nylon 1260d/2<br><br>100<br>-27° | Nylon 1260d/2 x 2 Sheets<br>100 |
| Rubber stock<br>Height of the first layer L1 (mm)<br>Height of the second layer L2 (mm)<br>Modulus of elasticity of the first layer (E*) (kg·f/cm$^2$)<br>Modulus of elasticity of the second layer (E*) (kg·f/cm$^2$) | 80<br>120<br>284<br>46 | 120<br>-<br>120<br>- | 120<br>-<br>120<br>- | 120<br>-<br>120<br>- | 120<br>-<br>120<br>- | 120<br>-<br>120<br>- | 120<br>-<br>120<br>- | 120<br>-<br>284<br>46 |
| Durability (time)  Note 3) | 860 | 780 | 150 | 420 | 400 | 500 | 650 | 630 |

0124617

Note 1) Material of reinforcing layer  steel (4 x 4) 0.175

Cord diameter  0.98mm

Cord angle (to the circumferential direction)  27°

Number of cords embedded (per 5 cm)  30 Ends/5cm

Note 2) Inside protective layer

The cord angle is all 27° to the circumferential direction.

Number of cords embedded  33 Ends/5cm

Modulus of dynamic elasticity of embedded rubber 98 $kg \cdot f/cm^2$

Outside protective layer

Number of cords embedded  33 Ends/5cm

Modulus of dynamic elasticity of embedded rubber 98 $kg \cdot f/cm^2$

Note 3) Conditions of durability test

Rim:  7.5V x 20  Internal pressure  8.0 $kg/cm^2$

Load  6,000 kg

Tire sizes  10 00R  20 14PR

Speed  20 km/hr

Note 4) A structure with the protective layer of Fig. 5 disposed adjacent only to the outside of the reinforcing layer.

Note 5) A structure with the protective layer of Fig. 5 disposed adjacent only to the outside of the reinforcing layer.

Durability test:

In a tram running test, the running time was measured until cracking occurred on the bead part under 6 ton load per one tire at 20 km/hr and with 8 kg/cm$^2$ internal pressure.  From the results shown in Table 1, improvement in durability is recognized in all ambodiments of this invention.

The moduli of dynamic elasticity given in Table 1 were measured on test pieces of 4mm width x 30mm length x 2mm thickness, at 70°C temperature, 10% initial strain and 10 Hz frequency, using a viscoelasticity spectrometer manufactured by Iwamoto Co.

WHAT IS CLAIMED IS:

1. A radial tire characterized in that while termination of at least one sheet of carcass ply formed of a radially or semi-radially arranged metal cord layer lined with rubber is wound up around a bead core, a rubber stock extending radially outwardly from its bottom end placed adjacent to the bead core in a space between the main carcass ply and the wound-up end part is arranged, with a reinforcing layer formed of high elasticity cords disposed outside the aforementioned wound-up end part and, further, with an inside protective layer provided between said reinforcing layer and the wound-up end part and an outside protective layer adjacent to the outside of the wound-up end part, these protective layers both having heights exceeding the top of the aforementioned reinforcing layer, the cords of the aforementioned inside protective layer being oriented substantially in the same direction as the cords of the reinforcing layer and the cords of the aforementioned outside protective layer oriented in the direction intersecting the cords of the reinforcing layer.

2. A radial tire according to Claim 1 wherein the reinforcing layer is formed with cords with modulus of initial elasticity higher than 105 kg·f/cm$^2$ embedded in rubber.

3.   A radial tire according to Claim 1 wherein the protective layer is an organic fiber cord layer.

4.   A radial tire according to Claim 1 wherein the modulus of dynamic elasticity (E*) of the rubber stock falls in the range of 80 $\sim$ 200 kg·f/cm$^2$.

5.   A radial tire characterized in that termination of at least one sheet of carcass ply formed of a radially or semi-radially arranged metal cord layer lined with rubber is wound up around a bead core and placed between the main carcass ply and the wound-up end part is a rubber stock which is composed of two layers of rubber, one a high elasticity rubber arranged adjacent to the bead core and the other a low elasticity rubber disposed adjacent to said high elasticity rubber and on the side wall side, with a reinforcing layer formed of high elasticity cords arranged outside the aforementioned wound-up end part and, further, with an inside protective layer provided between the reinforcing layer and the wound-up end part and an outside protective layer adjacent to the outside of the wound-up end part, these protective layers both having heights exceeding the top of the aforementioned reinforcing layer, the cords of the aforementioned inside protective layer being oriented substantially in the same direction as the cords of the reinforcing layer and the cords of the aforementioned outside protective layer oriented in the direction intersecting the cords of the reinforcing layer.

6. A tire according to Claim 4 wherein the modulus of dynamic elasticity (E*) of the high elasticity rubber is 100 ∿ 500 kg·f/cm$^2$ and the modulus of dynamic elasticity (E*) of the low elasticity rubber falls in the range of 30 ∿ 90 kg f/cm$^2$.

*1*

0124617

FIGURE 1 (A)'

FIGURE 1 (B)

FIGURE 2

FIGURE 3

FIGURE 4 (A) 3

FIGURE 4 (B)

FIGURE   5

FIGURE 6

FIGURE 7

0124617

# INTERNATIONAL SEARCH REPORT

International Application No. PCT/JP83/00391

| I. CLASSIFICATION OF SUBJECT MATTER (if several classification symbols apply, indicate all) [3] |
|---|

According to International Patent Classification (IPC) or to both National Classification and IPC

Int. Cl.[3] B60C 15/06

| II. FIELDS SEARCHED |
|---|

Minimum Documentation Searched [4]

| Classification System | Classification Symbols |
|---|---|
| I P C | B60C 15/06 |

Documentation Searched other than Minimum Documentation
to the Extent that such Documents are Included in the Fields Searched [5]

| | Jitsuyo Shinan Koho | 1928 – 1983 |
|---|---|---|
| | Kokai Jitsuyo Shinan Koho | 1971 – 1983 |

| III. DOCUMENTS CONSIDERED TO BE RELEVANT [14] | | |
|---|---|---|
| Category* | Citation of Document, [16] with indication, where appropriate, of the relevant passages [17] | Relevant to Claim No. [18] |
| Y | JP,Y$_2$, 52-48482 (The Toyo Rubber Industry Co., Ltd.) 4. November. 1977 (4. 11. 77) Column 3, lines 18 to 25 | 1, 3 |
| Y | JP,B$_2$, 55-40447 (The Yokohama Rubber Co., Ltd.) 17. October. 1980 (17. 10. 80) Column 6, lines 22 to 43 | 1, 3 |
| Y | JP,B$_2$, 56-41441 (The Toyo Rubber Industry Co., Ltd.) 28. September. 1981 (28. 9. 81) Column 3, lines 23 to 28 | 1, 2 |
| Y | JP,Y$_2$, 57-16724 (The Yokohama Rubber Co., Ltd.) 8. April. 1982 (8. 4. 82) Column 9, lines 25 to 36 | 1, 2 |
| Y | US,A, 4,234,029 (Continental Gummi-Werke Aktiengesellschaft) 18. November. 1980 (18.11.80) Column 3, lines 1 to 4 | 1 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

| IV. CERTIFICATION |
|---|

| Date of the Actual Completion of the International Search [2] | Date of Mailing of this International Search Report [2] |
|---|---|
| January 27, 1984 (27. 01. 84) | February 13, 1984 (13. 02. 84) |
| International Searching Authority [1] | Signature of Authorized Officer [20] |
| Japanese Patent Office | |

Form PCT/ISA/210 (second sheet) (October 1981)

01/24617

| | FURTHER INFORMATION CONTINUED FROM THE SECOND SHEET | |
|---|---|---|
| Y | FR,B, 2,226,293 (DUNLOP LTD) 25. June. 1976 (25. 6. 76) | 1 |
| A | JP,B₁, 45-34281 (The Firestone Tire and Rubber Co.) 4. November. 1970 (4.11.70) Column 5, lines 14 to 24 | 1,4,5,6 |
| A | JP,Y₂, 53-31524 (Sumitomo Rubber Industries, Ltd.) 5. August. 1978 (5. 8. 78) Column 3, lines 9 to 37 | 1,3 |
| A | JP,B₂, 55-43923 (Sumitomo Rubber Industries, Ltd.) 10. November. 1980 (10.11.80) Column 3, lines 12 to 32 | 1,4,5,6 |

**V.☐ OBSERVATIONS WHERE CERTAIN CLAIMS WERE FOUND UNSEARCHABLE [16]**

This international search report has not been established in respect of certain claims under Article 17(2) (a) for the following reasons:

1.☐ Claim numbers_____ because they relate to subject matter [12] not required to be searched by this Authority, namely:

2.☐ Claim numbers_____ because they relate to parts of the international application that do not comply with the prescribed requirements to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.

Form PCT/ISA/210 (supplemental sheet (2)) (October 1981)

International Application No. PCT/JP83/00391

| | FURTHER INFORMATION CONTINUED FROM THE SECOND SHEET | |
|---|---|---|
| A | JP,B$_2$, 56-47004 (Società Pneumàtici Pirelli S.p.A.) 6. November. 1981 (6. 11. 81) Column 6, lines 23 to Column 8, line 2 | 1,4,5,6 |
| A | US,A, 3,392,773 (The Firestone & Rubber Co.) 16. July. 1968 (16. 7. 68) Column 3, lines 3 to 11 | 1,4,5,6 |
| A | US,A, 3,853,163 (Industrie Pirelli S.p.A.) 10. December. 1974 (10.12.74), Column 4, lines 11 to 24 | 1,4,5,6 |

**V.☐ OBSERVATIONS WHERE CERTAIN CLAIMS WERE FOUND UNSEARCHABLE[10]**

This international search report has not been established in respect of certain claims under Article 17(2) (a) for the following reasons:

1.☐ Claim numbers_____ because they relate to subject matter [12] not required to be searched by this Authority, namely:

2.☐ Claim numbers_____ because they relate to parts of the international application that do not comply with the prescribed requirements to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.

Form PCT/ISA/210 (supplemental sheet (2)) (October 1981)